# EUROPÄISCHE PATENTANMELDUNG

(11) **EP 1 186 823 A2**
(43) Veröffentlichungstag der Anmeldung: **13.03.2002**
(21) Anmeldenummer: 01119990.8
(22) Anmeldetag: 18.08.2001
(51) Int. Cl.: F16L 37/14

(54) **Schnellkupplung zum Verbinden von Leitungsenden**

(30) Priorität: 05.09.2000 DE 10043619
(71) Anmelder: DaimlerChrysler AG, 70567 Stuttgart (DE)
(72) Erfinder: Averdung, Klaus, 70569 Stuttgart (DE); Köber, Toni, 71334 Waiblingen (DE); Semmler, Christoph, 71083 Herrenberg (DE)

(57) **Zusammenfassung**

Die Erfindung betrifft eine Schnellkupplung zum Verbinden von Leitungsenden mit einem etwa koaxial in ein Außenteil einsteckbaren Innenteil (14), welches nach dem Einsteckvorgang radial durch das Außenteil (12) und axial durch eine im Außenteil gehaltene Rastfeder (16) abgestützt ist, wobei im Außenteil vom Umfang ausgehende Durchgangsschlitze (18) von einander beabstandet gegenüberliegenden Rastschenkeln (20) der Rastfeder durchdrungen sind, die bei eingerastetem Innenteil jeweils sichernd in eine zugeordnete Rastvertiefung (22) am Außenumfang des Innenteils eingreifen, wobei die Rastschenkel durch radiales Aufweiten der Rastfeder aus der sichernden in eine aus ihrer Rastvertiefung ausgehobene Freigabestellung auseinanderspreizbar sind, und wobei die Rastschenkel jeweils an einem Ende zu einer etwa U-förmigen Einstecköffnung (24) für ein Lösewerkzeug miteinander verbunden und an ihrem anderen Ende durch einen quer zur Sicherungsebene abgewinkelten Führungsschenkel verlängert sind. Die abgewinkelten Führungsschenkel sind zumindest bei in die Freigabestellung aufgeweiteter Rastfeder über wenigstens ein als Verliersicherung wirkendes Haltemittel mit dem Außenteil verbunden.

## Beschreibung

Die Erfindung betrifft eine Schnellkupplung zum Verbinden von Leitungsenden nach dem Oberbegriff des Patentanspruchs 1.

Eine solche, der DE 37 29 570 A1 zu entnehmende Schnellkupplung umfaßt ein etwa koaxial in ein Außenteil einsteckbares Innenteil, welches beim Einsteckvorgang selbsttätig mit dem Außenteil verrastet, wonach es radial durch das Außenteil und axial durch eine im Außenteil gehaltene Rastfeder abgestützt ist. Hierzu sind im Außenteil vom Umfang ausgehende Durchgangsschlitze eingebracht, welche von zwei einander beabstandet gegenüberliegenden Rastschenkeln der Rastfeder durchdrungen sind. Bei eingerastetem Innenteil greifen die das Außenteil durchdringenden beiden Rastschenkel jeweils sichernd in eine zugeordnete Rastvertiefung am Außenumfang des Innenteils ein, um dieses axial an dem Außenteil zu sichern. Zum Lösen dieser Sicherung kann die Rastfeder radial nach außen aufgebogen werden, wobei die Rastschenkel radial aufgeweitet und aus der sichernden in eine aus ihrer Rastvertiefung ausgehobene Freigabestellung auseinandergespreizt werden. Für ein hierzu verwendetes Lösewerkzeug -wie die Klinge eines Schraubendrehers oder dgl. - sind die Rastschenkel jeweils an einem Ende zu einer etwa U-förmigen Einstecköffnung miteinander verbunden. An ihrem jeweils anderen Ende sind die Rastschenkel durch quer zur Sicherungsebene abgewinkelte Führungsschenkel verlängert. In der ausgehobenen Freigabestellung der Rastschenkel sollen die Führungsschenkel in zugeordnete, am Außenumfang des Außenteils eingebrachte Rastnuten einrasten, die eine Verschiebebewegung der Rastfeder radial nach außen verhindern sollen.

Als nachteilig bei dieser bekannten Schnellkupplung kann der Umstand angesehen werden, dass die Rastfeder z.B. bei einer zu kraftvollen Lösebewegung radial nach außen oder einem unsachgemäßen Werkzeugangriff über die Rastnuten springen, herunterfallen und ggf. dabei verloren gehen kann.

Aufgabe der Erfindung ist daher die Schaffung einer Schnellkupplung mit erleichterter Bedienung beim Lösen der selben.

Diese Aufgabe wird erfindungsgemäß durch eine Schnellkupplung mit den Merkmalen des Patentanspruchs 1 gelöst.

Vorteilhafte Ausführungsformen der Erfindung mit zweckmäßigen Weiterbildungen sind in den Unteransprüchen angegeben.

Die abgewinkelten Führungsschenkel der Schnellkupplung sind erfindungsgemäß zumindest bei in die Freigabestellung aufgeweiteter Rastfeder über wenigstens ein Haltemittel verliersicher an das Außenteil angebunden, wodurch die Rastfeder auch bei einem zu kraftvollen oder einem unsachgemäßen Werkzeugangriff nicht in radialer Richtung vom Außenteil abspringen und verloren gehen kann.

Insbesondere haben sich hierbei am Außenumfang des Außenteils umlaufend geschlossene Sicherungsfenster als vorteilhaft gezeigt, in welche die zugeordneten Führungsschenkel der Rastfeder eingreifen. Bei dieser Ausführungsform ist es zum Schutz vor unsachgemäßer Handhabung zudem auf vorteilhafte Weise nicht möglich, mit einem Werkzeug an den Führungsschenkeln anzugreifen und die Rastfeder vom Außenteil zu entfernen.

Eine Rastnut im Bereich des Sicherungsfensters ermöglicht es, die Rastfeder z.B. bei der Montage der Schnellkupplung in ihrer Freigabestellung festzulegen, bis das Innenteil eingesteckt ist und an dem Außenteil festgelegt werden soll.

Eine baulich einfache und kostengünstige Verliersicherung der Rastfeder ist geschaffen, wenn deren Führungsschenkel über einen Haltebügel miteinander verbunden sind. Insbesondere kostengünstig ist dabei die einteilige Ausgestaltung des Verbindungsbügels und der Rastschenkel.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine perspektivische Explosionsdarstellung auf die Schnellkupplung mit dem Innen- und dem Außenteil sowie der Rastfeder nach einer ersten Ausführungsform der Erfindung;
- Fig. 2: eine Seitenansicht auf das Außenteil und die Rastfeder gemäß Fig.1;
- Fig. 3: ein Schnitt durch das Außenteil Außenteil und die Rastfeder gemäß den Figuren 1 und 2 entlang der Linie III-III in Fig.2;
- Fig. 4: eine schematische Perspektivansicht auf das Außenteil und die Rastfeder nach einer zweiten Ausführungsform der Erfindung;
- Fig.5a-5c: eine Vorderansicht, eine Seitenansicht und eine Perspektivansicht auf das Außenteil und die Rastfeder nach einer dritten Ausführungsform der Erfindung; und in

- Fig.6a-6d: eine Vorderansicht, eine Seitenansicht sowie zwei Perspektivansichten auf das Außenteil und die Rastfeder nach einer vierten Ausführungsform der Erfindung.

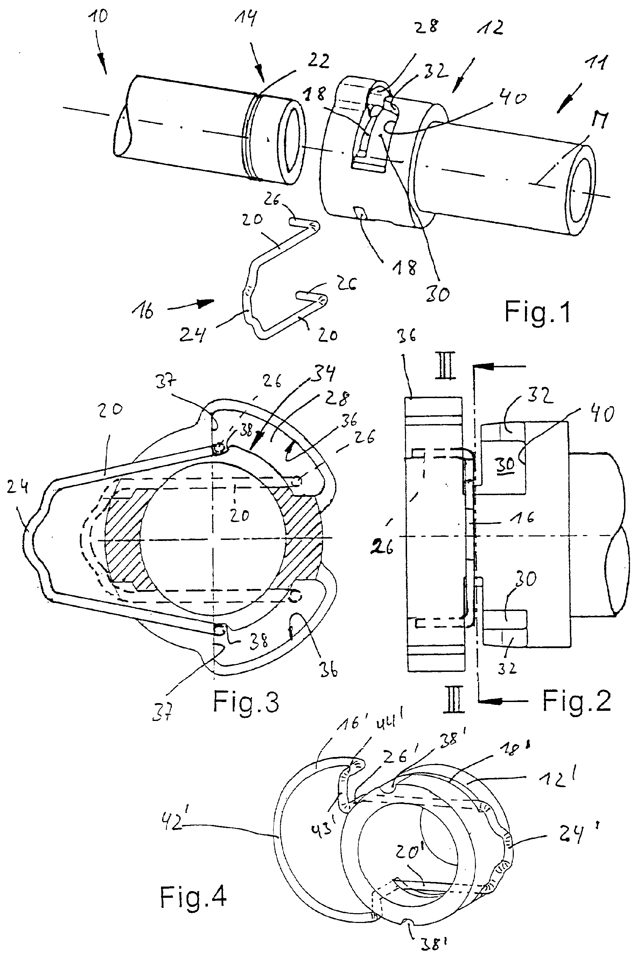

Fig.1 zeigt in perspektivischer Explosionsdarstellung die Schnellkupplung zum Verbinden von Leitungsenden 10,11 von Schläuchen, Kabeln, Drähten oder dgl. mit einem etwa koaxial in ein Außenteil 12 einsteckbaren Innenteil 14, welches nach dem Einsteckvorgang radial innerhalb des Außenteils 12 abgestützt ist. Das Außenteil 12 und das Innenteil 14 sind hier als Hülsenkörper mit im wesentlichen ringförmigem Querschnitt ausgebildet; gleichfalls wäre ein rechteckiger oder polygonaler Querschnitt von Außenteil 12 und Innenteil 14 denkbar. Axial ist die Steckverbindung nach dem Zusammenstecken durch eine im Außenteil 12 gehaltene Rastfeder 16 zu sichern, welche auf das Außenteil 12 aufsteckbar ist. Im Außenteil 12 sind hierzu zwei vom Umfang ausgehende, sich diametral gegenüberliegende Durchgangsschlitze 18 vorgesehen, welche wie in Fig.3 gestrichelt angedeutet - in gesichertem Zustand der Steckverbindung - von einander beabstandet gegenüberliegenden Rastschenkeln 20 der Rastfeder 16 durchdrungen sind. Bei eingerastetem Innenteil 14 greifen die beiden Rastschenkel 20 dabei jeweils sichernd in eine zugeordnete, hier als umlaufende Nut ausgebildete Rastvertiefung 22 am Außenumfang des Innenteils 14 ein. Die beiden Rastschenkel 20 sind jeweils am einen Ende zu einer etwa U-förmigen Einstecköffnung 24 für ein Lösewerkzeug wie die Klinge eines Schraubendrehers oder dgl. miteinander verbunden. An ihrem anderen Ende umfassen die Rastschenkel 20 jeweils einen zugeordneten, quer zur Sicherungsebene abgewinkelten und hier parallel zur Mittelachse M des Außenteils 12 verlaufenden Führungsschenkel 26, welche in ein jeweils zugeordnetes, insbesondere unter Bezugnahme von Fig.4 noch näher beschriebenes Sicherungsfenster 28 des Außenteils 12 eingreift. Die beiden Führungsschenkel 26 stehen hier in der selben Richtungen von ihrem zugeordneten Rastschenkel 20 ab. Die Rastfeder 16 mit den Rastschenkeln 20, den Führungsschenkeln 26 und dem die Einstecköffnung 24 bildenden Abschnitt ist hier einstückig aus Federdraht hergestellt; eine mehrteilige Ausgestaltung ggf. auch aus anderen Werkstoffen wäre ebenfalls denkbar. Im Bereich der Durchgangsschlitze 18 sind zur einfachen Montage der Rastfeder 16 am Außenumfang des Außenteils 12 Nuten 30 eingebracht, in welchen beim Anbringen der Rastfeder 16 zunächst die Führungsschenkel 26 geführt sind. Die Rastfeder 16 kann so weit in die beiden sich diametral gegenüberliegenden Nuten 30 eingeschoben werden, bis die Führungsschenkel 26 an Einführschrägen 32 der Nuten 30 anlaufen. Mittels dieser Einführschrägen 32 werden die Führungsschenkel 26 in Richtung der Sicherungsfenster 28, und die Rastschenkel 20 in Richtung der Durchgangsschlitze 18 bewegt, bis die Rastschenkel 20 schließlich in den Durchgangsschlitzen 18 einrasten bzw. die Führungsschenkel 26 in den Sicherungsfenstern 28 angeordnet sind. Nach der Montage ist die Rastfeder 16 nach Fig. 3 am Außenteil 12 angebracht.

In Fig. 2 ist in Seitenansicht und in Fig.3 ist in einem Schnitt entlang der Linie III-III in Fig.2 das Außenteil 12 mit der daran angebrachten Rastfeder 16 gemäß Fig.1 gezeigt, wobei die Rastschenkel 20 der Rastfeder 16 durch radiales Aufweiten aus der - in Fig.3 gestrichelt angedeuteten - sichernden in eine - in Fig.3 mit ausgezogenen Linien angedeutete - ausgehobene Freigabestellung auseinanderspreizbar sind. Durch diesen Überführen aus der sichernden in die ausgehobene Freigabestellung sind die Rastschenkel 20 mit der Nut im Innenteil 14 (Fig.1) außer Eingriff bringbar, so dass zum Lösen der Schnellkupplung das Innenteil 14 aus dem Außenteil 12 herausgezogen werden kann. Das Auseinanderspreizen der Rastschenkel 20 erfolgt mittels der abgewinkelten Führungsschenkel 26, welche beim Herausziehen der Rastfeder 16 - hier in die linke Richtung - jeweils an einer inneren Begrenzungswand 34 des zugeordneten Sicherungsfensters 28 entlang geführt sind. In Fig.3 ist insbesondere erkennbar, dass die am Außenumfang des Außenteils 12 angeordneten Sicherungsfenster 28 jeweils durch die Begrenzungswände 34,36 umlaufend geschlossen sind, so dass der Führungsschenkel 26 der Rastfeder 16 nur innerhalb des entsprechenden Sicherungsfensters 28 bewegt werden kann. Es ist ersichtlich, dass auch bei einer kraftvollen Lösebewegung radial nach außen aus der gestrichelt dargestellten, sichernden in die mit ausgezogenen Linien gezeigten Freigabestellung die Rastfeder 16 nicht verloren gehen kann, da die freie Bewegbarkeit der Führungsschenkel 26 durch die Begrenzungswände 34,36 der Sicherungsfenster 28 begrenzt ist. Vielmehr laufen die beiden Führungsschenkel 26 auch bei einer kraftvollen Lösebewegung an den Abschnitten 37 der Begrenzungswände 36 an, welche das maximale Herausziehen der Rastfeder 16 bestimmen. Darüber hinaus ist durch die Begrenzungswände 36 der Sicherungsfenster 28 ein wirksamer Schutz vor einem unsachgemäßen Werkzeugangriff direkt an den Führungsschenkel 26 geschaffen, so dass ein dadurch bedingtes Abspringen der Rastfeder 16 von dem Außenteil 12 vermieden werden kann. Weiter umfaßt jedes Sicherungsfenster 28 eine parallel zur Mittelachse M des Außenteils 12 verlaufende Rastnut 38, in welche der zugeordnete Führungsschenkel 26 in der Freigabestellung der Rastfeder 16 einrastet. Dies Rastnut 38 soll verhindern, dass die Rastfeder 16 z.B. unbeabsichtigt während des Einsteckens des Innenteils 14 in das Außenteil 12 aus der Freigabestellung in die sichernde Stellung zurückspringt. Die sich in ihrer Freigabestellung befindende Rastfeder 16 kann von dem Außenteil 12 entfernt werden, indem diese von der Sicherungsebene in Richtung der Nuten 30 geschoben wird, bis die Rastschenkel 20 an zugeordneten Begrenzungswänden 40 der Nuten 30 anstoßen, sich die Führungsschenkel 26 außerhalb der Sicherungsfenster 28 befinden und die Rastfeder 16 radial nach außen abgezogen werden kann.

In Fig.4 ist eine schematische Perspektivansicht auf das Außenteil 12' und die daran angebrachte Rastfeder 16' der Schnellkupplung nach einer zweiten Ausführungsform gezeigt.

Hierbei sind die Rastschenkel 20', der die Einstecköffnung 24' bildende Abschnitt und die Führungsschenkel 26' gemäß der in Fig.1 gezeigten Rastfeder 16 gestaltet. Zur Verliersicherung dient hier ein die Führungsschenkel 26' miteinander verbindender Haltebügel 42', der hier einstückig mit den übrigen Teilen der Rastfeder 16' ausgebildet ist. Dabei ist der Haltebügel 42' über abgewinkelte Abschnitte 43',44' derart an den beiden Führungsschenkel 26' angeordnet, dass der Haltebügel 42' etwa in der Sicherungsebene liegt. Beim Überführen der Rastfeder 16' aus der hier gezeigten sichernden Stellung in die Freigabestellung werden die Rastschenkel 20' mittels der Führungsschenkel 26' wie bei der vorstehend beschriebenen Ausführungsform aufgeweitet, wobei am Außenumfang des Außenteils 12' sich diametral gegenüberliegende Rastnuten 38' eingelassen sind, in welche der zugeordnete Führungsschenkel 26' nach Erreichen der Freigabestellung einrastet. Auch hier ist ersichtlich, dass bei einer kraftvollen Lösebewegung radial nach außen und einem daraus resultierenden Überspringen der Rastnuten 38' die Rastfeder 16' nicht verloren gehen bzw. abspringen kann, sondern vielmehr durch den Haltebügel 42' am Außenteil 12' angebunden ist.

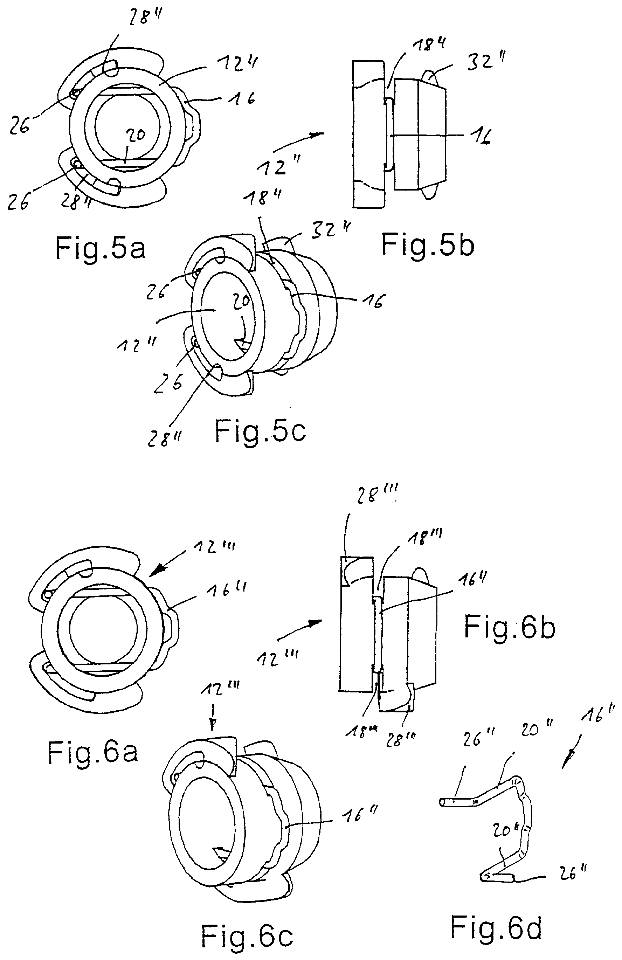

In den Figuren 5a bis 5c sind in Vorderansicht, in Seitenansicht und in Perspektivansicht das Außenteil 12'' und die daran befestigte Rastfeder 16 der Schnellkupplung nach einer dritten Ausführungsform dargestellt. Die Rastfeder 16 ist dabei gemäß der ersten Ausführungsform ausgebildet. Das Außenteil 12'' unterscheidet sich von dem im ersten Ausführungsbeispiel beschriebenen im wesentlichen dadurch, dass keine Nuten 30 zur Montage der Rastfeder 16 am Außenumfang des Außenteils 12'' eingebracht sind; vielmehr sind hier am Außenumfang angeformte Einführschrägen 32'' vorgesehen. Demgemäß kann die Rastfeder 16 auf das Außenteil 12'' aufgeschoben werden, bis die Führungsschenkel 26 an den Einführschrägen 32'' anlaufen und die Führungsschenkel 26 in Richtung der Sicherungsfenster 28'', und die Rastschenkel 20 in Richtung der Durchgangsschlitze 18'' bewegt werden. Schließlich rasten die Rastschenkel 20 in den Durchgangsschlitzen 18'' ein. Die Figuren 6a bis 6d zeigen eine Vorderansicht, eine Seitenansicht sowie zwei Perspektivansichten auf das Außenteil 12''' und die Rastfeder 16'' nach einer vierten Ausführungsform. Hierbei stehen die beiden Führungsschenkel 26'' der Rastfeder 16'' in entgegengesetzten Richtungen von ihrem zugeordneten Rastschenkel 20" ab. Demgemäß ist, wie insbesondere aus Fig.6b ersichtlich, das eine Sicherungsfenster 28''' zur Aufnahme des einen Führungsschenkels 26'' auf der einen Seite der Durchgangsschlitze 18''' und das andere Sicherungsfenster 28''' zur Aufnahme des weiteren Führungsschenkels 26'' auf der anderen Seite der Durchgangsschlitze 18''' angeordnet.

## Patentansprüche

1. Schnellkupplung zum Verbinden von Leitungsenden mit einem etwa koaxial in ein Außenteil (12,12',12'',12''') einsteckbaren Innenteil (14), welches nach dem Einsteckvorgang radial durch das Außenteil (12,12',12'',12''') und axial durch eine im Außenteil (12,12',12'',12''') gehaltene Rastfeder (16,16',16'') abgestützt ist, wobei im Außenteil (12,12',12'',12''') vom Umfang ausgehende Durchgangsschlitze (18,18',12'',12''') von einander beabstandet gegenüberliegenden Rastschenkeln (20,20',20") der Rastfeder (16,16',16'') durchdrungen sind, die bei eingerastetem Innenteil (14) jeweils sichernd in eine zugeordnete Rastvertiefung (22) am Außenumfang des Innenteils (14) eingreifen, wobei die Rastschenkel (20,20',20'') durch radiales Aufweiten der Rastfeder (16,16',16'') aus der sichernden in eine aus ihrer Rastvertiefung (22) ausgehobene Freigabestellung auseinanderspreizbar sind, und wobei die Rastschenkel (20,20',20'') jeweils an einem Ende zu einer etwa U-förmigen Einstecköffnung (24,24') für ein Lösewerkzeug miteinander verbunden und an ihrem anderen Ende durch einen quer zur Sicherungsebene abgewinkelten Führungsschenkel (26,26',26'') verlängert sind,
**dadurch gekennzeichnet,**
**dass** die abgewinkelten Führungsschenkel (26,26',26'') zumindest bei in die Freigabestellung aufgeweiteter Rastfeder (16,16',16'') über wenigstens ein als Verliersicherung wirkendes Haltemittel (28,42',28'',28''') an das Außenteil (12,12',12'',12''') angebunden sind.

2. Schnellkupplung nach Anspruch 1,
**dadurch gekennzeichnet,**
**dass** am Außenumfang des Außenteils (12,12'',12''') umlaufend geschlossene Sicherungsfenster (28,28'',28''') vorgesehen sind, in welche der zugeordnete Führungsschenkel (26,26'') der Rastfeder (16,16'') eingreift.

3. Schnellkupplung nach Anspruch 2,
**dadurch gekennzeichnet,**
**dass** die Sicherungsfenster (28,28'',28''') jeweils eine Rastnut (38) umfassen, in welche der zugeordnete Führungsschenkel (26,26'') in der Freigabestellung der Rastfeder (16,16'') eingerastet ist.

4. Schnellkupplung nach Anspruch 1,
**dadurch gekennzeichnet,**
**dass** die beiden Führungsschenkel (26,26',26'') der Rastfeder (16,16'') in der selben oder in entgegengesetzten Richtungen von ihrem zugeordneten Rastschenkel (20,20',20'') abstehen.

5. Schnellkupplung nach Anspruch 1,
**dadurch gekennzeichnet,**
**dass** als Haltemittel ein die Führungsschenkel (26') miteinander verbindender Haltebügel (42') dient.

6. Schnellkupplung nach Anspruch 1,
**dadurch gekennzeichnet,**
**dass** der Haltebügel (42') mit den Rastschenkeln (20') einteilig ausgebildet sind.

7. Schnellkupplung nach Anspruch 6,
**dadurch gekennzeichnet,**
**dass** am Außenumfang des Außenteils (12') eine Rastnut (38') eingelassen ist, in welche der zugeordnete Führungsschenkel (26') in der Freigabestellung der Rastfeder (16') eingerastet ist.

8. Schnellkupplung nach Anspruch 1,
**dadurch gekennzeichnet,**
**dass** das Außenteil (12,12',12'',12''') und das Innenteil (14) als Hülsenkörper ausgebildet sind.
